Europäisches Patentamt

European Patent Office

Office européen des brevets

(11) Veröffentlichungsnummer: **0 507 202 B1**

(12) **EUROPÄISCHE PATENTSCHRIFT**

(45) Veröffentlichungstag der Patentschrift: **22.11.95**

(51) Int. Cl.6: **C09D 17/00**

(21) Anmeldenummer: **92105099.3**

(22) Anmeldetag: **25.03.92**

Die Akte enthält technische Angaben, die nach dem Eingang der Anmeldung eingereicht wurden und die nicht in dieser Patentschrift enthalten sind.

(54) **Universalfarbpaste.**

(30) Priorität: **05.04.91 DE 4111036**

(43) Veröffentlichungstag der Anmeldung:
**07.10.92 Patentblatt 92/41**

(45) Bekanntmachung des Hinweises auf die Patenterteilung:
**22.11.95 Patentblatt 95/47**

(84) Benannte Vertragsstaaten:
**AT BE CH DE ES FR LI NL**

(56) Entgegenhaltungen:
**EP-A- 0 068 044**
**FR-A- 2 277 131**
**US-A- 4 293 475**

(73) Patentinhaber: **Chemische Werke Kluthe GmbH**
**Gottlieb-Daimler-Strasse 12**
**69115 Heidelberg (DE)**

(72) Erfinder: **Schlemper, Wolfgang**
**Neckarstrasse 9-11**
**W-7144 Asperg (DE)**

(74) Vertreter: **Grussdorf, Jürgen, Dr. et al**
**Patentanwälte Zellentin & Partner**
**Rubensstrasse 30**
**D-67061 Ludwigshafen (DE)**

**Beschreibung**

Gegenstand der vorliegenden Erfindung ist eine Universalfarbpaste zum Abmischen mit allen handelsüblichen Farb- und Bindemittelsystemen.

Anstrichfarben, welche in kleineren Gebinden benötigt werden, werden hergestellt, indem man die Bindemittel und sonstigen Hilfsstoffe enthaltenden Basisfarbmischungen durch Zugabe geeigneter Farbpigmente auf die gewünschten Farbtönungen abmischt. Pulverförmige Pigmente haben dabei den Nachteil, daß sie sich nur schwierig homogen in der Masse verteilen lassen, schlecht zu dosieren sind und der Farbstaub leicht die Umgebung verunreinigt. Man ist daher schon früh dazu übergegangen, die Farbpigmente mit entsprechenden Bindemittel-Lösungsmittelsystemen zu Farbkonzentraten zu vermischen, welche dann wesentlich einfacher in die Grundmischung eingerührt werden können, über das Volumen dosiert werden und als Flüssigkeiten auch leichter gehandhabt werden können. Der Nachteil solcher Mischungen liegt darin, daß durch den hohen Anteil an Bindemitteln und Lösungsmitteln das Farbkonzentrat praktisch nur in Produkten der gleichen Binde- und Lösungsmittelzusammensetzung eingerührt werden kann und mit andersartigen Produkten leicht Entmischungen oder Verklumpungen durch Inkompatibilität der Binde- bzw. Lösungsmittel bzw. sonstigen Hilfsstoffe auftreten.

Im Markt sind ferner pigmenthaltige Pasten aus wässrigen Harzdispersionen bekannt, die einen hohen Netzmittelgehalt und gegebenenfalls einen Anteil an wasserlöslichen Lösemitteln, insbesondere Glykol, enthalten und als "universell einsetzbare" Farbkonzentrate für wässrige Bindemittelsysteme verwendet werden sollen. Ferner sind pastöse, pigmentierte Trägerharze mit breiter Verträglichkeit für lösemittelhaltige Bindemittelsysteme bekannt, die jedoch in wässrigen Systemen nicht oder nur bedingt einsetzbar sind.

Diese Pasten haben den Vorteil, daß sie gegenüber den Flüssigkonzentraten eine vergleichsweise höhere Pigmentkonzentration enthalten, aus wiederverschließbaren Tuben sehr sauber und einfach appliziert werden und eine sehr einfache Dosierung erlauben. Eine Farbpaste, welche sowohl in wässrigen als auch organischen Lösungsmittel/Bindemittelsystemen in hoher Konzentration anwendbar oder dosierbar ist, ist jedoch bisher nicht bekannt.

Aufgabe der vorliegenden Erfindung war es, eine für praktisch alle handelsüblichen Bindemittelsysteme sowohl auf wässriger als auch auf organischer Lösungsmittelbasis geeignete Farbpaste zu entwickeln, welche darüber hinaus eine möglichst hohe Pigmentkonzentration aufweist und leicht und ohne Schwierigkeiten mit den vorstehenden Bindemittelsystemen homogen vermischt werden kann.

Die Lösung dieser Aufgabe ist durch die im Hauptanspruch wiedergegebenen Merkmale gegeben und wird durch die in den Unteransprüchen angeführten Merkmale gefördert und unterstützt.

Die in der erfindungsgemäßen Universalfarbpaste brauchbaren Pigmente sind praktisch alle bekannten anorganischen und organischen Pigmente, die für solche Farbsysteme üblich sind. Beispielhaft seien als anorganische Pigmente Oxide und Oxidhydrate, wie Chromoxidgrün, Eisenoxidrot, Eisenoxidgelb, Eisenoxidbraun, Titandioxid und als Mischphasen-Pigmente Nickeltitangelb, Chromtitangelb, Kobaltblau, Kobaltgrün, Chrompigmente, wie Chromoxidgrün oder Chromoxidhydratgrün, Zinkgelb oder Barytgelb, sowie Blaupigmente, wie Berlinerblau genannt.

Als organische Pigmente kommen Azo-Verbindungen, wie $\beta$-Naphthol-Pigmente, Naphtol-AS-Pigmente, ferner polycyclische Pigmente, wie Chinophthalon-Pigmente, andere Chinon-Pigmente, Isoindolinon-Pigmente, Pyranthron-Pigmente, Chinacridon-Pigmente, Indanthron-Pigmente in Frage.

Die vorstehenden Pigmente werden als Pulver einer Korngröße von 1 bis 10, vorzugsweise um 5 $\mu$, in die Pasten eingearbeitet und dabei homogenisiert, benetzt, dispergiert und gegebenenfalls auf die gewünschte Korngröße zerkleinert. Die Pigmente sind in einer Konzentration von 18-65 % enthalten, wobei für organische Pigmente Konzentrationen von etwa 20-25 Gew.-% und für anorganische Pigmente Konzentrationen von 40-65 Gew.-% vorzugsweise eingesetzt werden.

Die Universalfarbpasten enthalten ferner 0,5-5 Gew.-% nichtionogene Netzmittel. Diese dienen einerseits zur Benetzung und Stabilisierung der Pigmentpartikel bei der Herstellung der Farbpaste und insbesondere aber der Verteilung der Farbpaste in der Bindemittelgrundrezeptur. Da die Grundrezepturen üblicherweise bereits selbst erhebliche Mengen an den verschiedensten Netzmitteln und Stabilisatoren enthalten, ist es erforderlich ausschließlich nichtionogene Netzmittel zu verwenden, da diese keine Interaktionen beim Zusammenmischen mit den Grundrezepturen hervorrufen.

Als Netzmittel können Alkylphenolpolyoxiethylenkondensate, nichtionogene Alkylphenolethoxylate, Polyacrylsäuren, Phosphatester, und Fettalkoholethoxylate, d.h. Netzmittel und Dispergierhilfsmittel, die anionisch oder nichtionigen sind, verwendet werden.

Entscheidend für die Brauchbarkeit der erfindungsgemäßen Universalfarbpasten ist die richtige Auswahl der darin emulgierten organischen Polymere bzw.Bindemittel. Die Polymeren erfüllen in dieser Rezeptur zwei wesentliche Funktionen. Zum ersten dienen sie zusammen mit den festen Pigmenten als feste Phase, durch die zusammen mit der entsprechenden Menge von Lösungsmitteln eine pastenartige Konsistenz der Gesamtmischung hergestellt wird. Zum anderen lagern sich diese Polymerteilchen aufgrund elektrostatischer Kräfte an die Oberfläche der Pigmenteilchen an und hüllen diese quasi ein, so daß sich das gesamte Aggregat beim Dispergieren in dem Bindemittelsystem weitgehend wie ein entsprechend großes Polymerteilchen verhält und als solches sowohl in wässrigen Dispersionen als auch in organischen Lösemitteln stabile Dispersionen ergibt, welche mit den Bindemitteln der Grundrezeptur verträglich sind.

Als polymere Systeme kommen insbesondere Mono- und Copolymerisate auf Polymethacrylatbasis oder Polyacrylatbasis, wasserlösliche und emulgierbare Leinölprodukte, polymerisiertes Kolophonium, Keton- und Aldehydharze in Frage. Erfindungsgemäß nichtbrauchbar sind nichtpolarisierbare Harze, z.B. auf Ethylen-, Propylen- oder Butadienbasis.

Die als Bindemittel dienenden organischen Polymere sind in einer Konzentration von 10-50 Gew.-%, vorzugsweise etwa 20-40 % in der Universalfarbpaste enthalten. Soweit die Bindemittel nicht gelöst sind, liegen sie als sehr feinteilige Dispersion, d.h. bis Korngrößen von 0,1-5 $\mu$m, vorzugsweise etwa 1 $\mu$m in der Paste vor.

Um die vorstehenden Bestandteile der Pasten in eine entsprechende Pastenform zu bringen, ist es notwendig, ein Lösungsmittel in einer Menge von ca. 20-25 Gew.-% zuzusetzen. Um eine Mischbarkeit der Paste mit wässrigen und organischen Bindemittelsystemen sicherzustellen, kommen als Lösemittel nur solche in Frage, welche sowohl in Wasser als auch in organischen Lösungsmitteln mischbar bzw. in wässrigen Systemen emulgierbar sind. In Frage kommen hier insbesondere wasserlösliche Ether, wie Furan, Dioxan, Mono- oder Diether oder Diester oder Etherester des Glykols oder Polyethylenglykols, Dimethylformamid, Dimethylsulfoxid, Dimethylacetamid, N-Methyl-pyrrolidon, sowie wasserlösliche Ketone, wie Aceton oder Methylethylketon. Für die Vermischbarkeit mit organischen Bindemittelsystemen sollten die vorstehenden Lösemittel weitgehend wasserfrei sein.

Niedere Alkohole, wie Ethanol, Isopropanol und Butanol, oder Polyalkohole, wie Glykol oder Polyethylenglykol, welche an sich ebenfalls brauchbar wären, können nicht verwendet werden, soweit die Farb- und Bindemittel, mit denen die Farbpaste eingesetzt werden soll, Isocyanate oder andere mit Protonen reagierende Stoffe enthält.

Neben den vorstehenden Inhaltsstoffen, die notwendige Bestandteile der erfindungsgemäßen Universalfarbpaste darstellen, kann diese zusätzlich noch für die Herstellung solcher dispergierten Systeme bekannte Hilfsstoffe enthalten. Als solche sind beispielsweise Antiabsetzmittel, wie kolloide Kieselsäure, Fettalkoholsulfate, anorganische Schichtsilikate, wie Montmorillonit, Hectorit, Bentonit etc., Antischaummittel, beispielsweise modifizierte Acrylat-Copolymere, bakterizide Stoffe, Komplexbildner etc. genannt.

Zur Herstellung der erfindungsgemäßen Pasten wird vorzugsweise zunächst eine Stammlösung hergestellt, in der man alle Bindemittel, Netz- und Dispergierhilfsmittel, Verdicker und Lösungsmittel in einem geeigneten Rührwerk zusammengibt und bei Zimmertemperatur oder unter Erwärmen, beispielsweise auf 40-60 °C, zu einer homogenen Masse verrührt. Bei üblichem Ansätzen in der Größenordnung von 300-400 kg kann dieser Vorgang 1-2 h dauern.

Die vorstehende Stammlösung wird mit dem Pigmentpulver vermischt und in einer geschlossenen Rührwerksmühle, beispielsweise einer Sand-, Perl- oder Kugelmühle, bearbeitet, bis sich einerseits das Farbpigment homogen in der gesamten Masse verteilt hat und andererseits die Korngröße der Pigmente auf die gewünschte Größenordnung von 0,1-10 $\mu$m, vorzugsweise 1-5 $\mu$m, eingestellt ist. Wieviel von dem jeweiligen Pigment in die Stammlösung eingearbeitet werden kann, hängt einerseits von den Zusammensetzungsverhältnissen der Stammlösung, andererseits jedoch insbesondere von den Pigmenteigenschaften, wie Ölzahl, Kristallstruktur, Korngröße und Korngrößenverteilung ab. Überraschenderweise erlaubt es die erfindungsgemäße Zusammensetzung Pigmente bis zu einer Menge bis zu 65 % in die Paste einzuarbeiten, so daß entsprechend geringe Mengen anschließend zum Einfärben und Abtönen in der Farbgrundmischung ausreichend sind.

In dem folgenden Beispiel sind einige Beispiele für erfindungsgemäße Universalfarbpasten sowie die damit hergestellten Farben aufgeführt.

Universalfarbpasten

1) Herstellung der Basismischung

In einem Rührkessel werden 18,0 Gew.-Teile Xylol bei Raumtemperatur vorgelegt und unter Rühren 2,0 Gew.-Teile Montmorillonitpulver modifiziert mit Alkylamin (Bentone Pulver 34 der Fa. NL Industries) eingerührt.

3

Die so erhaltene Paste wird mit 488 Gew.-Teilen Methoxypropylacetat und 192 Gew.-Teilen Polymethacrylatpulver (Plexigum P 28 der Fa. Röhm Chemie) versetzt und unter starkem Rühren in 1-2 Stunden dispergiert. Danach werden 100 Gew.-Teile eines nichtionigenen Netzmittels (Troysol UGA) zugefügt und erneut 5-10 min gerührt, wodurch eine stabile Emulsion erhalten wird.

2) Herstellung der Farbpasten

a) 65 Gew.-Teile der vorbeschriebenen Emulsion werden in einem hochtourigen Mischwerk mit 35 Gew.-Teilen Oxidgelb 3910 (Korngröße ca. 70-80 $\mu$m vorgemischt) und in einer Perlmühle auf eine Kornfeinheit von ca. 10 $\mu$m vermahlen und homogenisiert. Die Farbpaste ist danach gebrauchsfertig.

b) 80 Gew.-Teile der gemäß 1) hergestellten Farbpaste werden mit 20 Gew.-Teilen Sico Rot 3855 (Korngröße ca. 85 $\mu$m) vorgemischt und mehrfach in einer Perlmühle gemahlen, bis eine Kornfeinheit von ca. 10 $\mu$m erreicht ist. Das Produkt ist danach gebrauchsfertig.

c) Andere organische und anorganische Pigmente können nach entsprechenden Verfahren eingesetzt werden. Die Mengenverhältnisse werden dabei nach der gewünschten Farbintensität gegebenenfalls variiert.

d) Organische, lösliche Farbstoffe werden in einer ausreichenden Menge Lösungsmittel, beispielsweise Butylacetat oder Methoxypropylacetat, gelöst und in die Farbpaste gemäß 1) eingerührt. Die Stufe des Vermahlens, um eine ausreichende Kornfeinheit zu erhalten, entfällt.

Anwendungstechnische Beispiele

Beispiel 1:

Einbrennlack grau, 30', 130°C

| | | |
|---|---|---|
| UN-Weißpaste | 20,00 | Gewichtsteile |
| UN-Rußpaste | 2,75 | " |
| Rizinenalkyd/Xylol, 60 %-ig | 52,75 | " |
| Isobutyliertes Melaminharz, 55 %-ig/ Butanol/Xylol | 18,00 | " |
| Polysolvan O (hochsiedendes Gemisch aus Estern und Ketonen) | 2,00 | " |
| Butanol | 3,50 | " |
| Silikonöl/Xylol, 1 %-ig | 1,00 | " |
| | 100,00 | " |

Beispiel 2

2-Komponenten PUR-Decklack rot

| | | |
|---|---|---|
| Hydroxylgruppenhaltiges Polyacrylat, 50 %-ig, Xylol/Butylacetat | 70,00 | Gewichtsteile |
| UN-Rotpaste, anorganisch | 16,50 | " |
| UN-Rotpaste, organisch | 4,50 | " |
| UN-Weißpaste | 2,00 | " |
| Silikonöl/Toluol, 1 %-ig | 7,00 | " |
| | 100,00 | " |

Härter: Aliphatisches Isocyanat

Beispiel 3

wasserverdünnbarer Malerlack, weiß, hochglänzend

wasserlösliches Alkydharz
80 %-ig i. Butylglykol                          26,10 Gewichtsteile

Triethylamin                                     0,45         "

Ammoniak                                         1,20         "

Butylglykol                                      1,80

Entschäumer (wasseremulgierbar)                  1,30         "

Entblasungshilfen                                0,10

Hautverhinderungsmittel
(Butyraldoxim)                                   0,20

UN Weißpaste, 65 %-ig                           37,00         "

Kobalt (Zirkonium Trockner)                      1,00         "

VE-Wasser                                       31,85         "
                                      ----------------------
                                               100,00         "

## Beispiel 4

Dispersionsfarbe, hellblau für Innen, waschbeständig, mit guter Deckkraft

| | | |
|---|---|---|
| Wasser | 30,40 | Gewichtsteile |
| 10 %-ige wässrige Lösung eines Na-Polyphosphates | 1,50 | " |
| silikonfreier Entschäumer | 0,15 | " |
| China Clay, hell (= Kaolin, Al-Silikat) | 2,50 | " |
| Konservierungsmittel (Chlor-acetamid/Natriumfluorid-Basis) | 0,15 | " |
| Natürliche Kreide (CaCO$_3$) | 47,00 | " |
| Titandioxid (Rutil-Type) | 7,00 | " |
| UN-Paste phthaloncyanin-blau, 18 %-ig | 0,50 | " |
| Methylcellulose | 0,45 | " |
| NaOH, 10 %-ig in Wasser | 0,10 | " |
| anionisches Netzmittel | 0,30 | " |
| Polyvinylacetat-Dispersion, 50 %-ig | 8,00 | " |
| Testbenzin | 1,95 | " |
| | 100,00 | " |

**Patentansprüche**

1. Universalfarbpaste zum Abmischen mit allen handelsüblichen Farb- und Bindemittelsystemen, enthaltend Farbpigmente, Netzmittel, Bindemittel und Lösungsmittel,
**dadurch gekennzeichnet,** daß die Mischung
18 - 65 % Pigmente
0,5 - 5 % nichtionogene Netzmittel
10 - 50 % wasser- und lösungsmittellösliche oder emulgierbare organische polymere Bindemittel
20 - 50 % wasserlösliche organische Lösungsmittel
enthält, wobei das Pigment/Bindemittelverhältnis 0,6:1 bis 5:1 beträgt.

2. Universalfarbpaste nach Anspruch 1, **dadurch gekennzeichnet,** daß sie zusätzlich viskositätserhöhende Mittel, Antiabsetzmittel und Antischaummittel enthält.

3. Universalfarbpaste nach Anspruch 1 oder 2, **dadurch gekennzeichnet,** daß die Paste eine Viskosität von 1,5-5 Pa•s bei 20°C aufweist.

**4.** Universalfarbpaste nach einem der Ansprüche 1 bis 3, **dadurch gekennzeichnet,** daß als Pigmente 20-25 % organische oder 40-65 % anorganische Pigmente eingesetzt werden.

**5.** Universalfarbpaste nach einem der Ansprüche 1 bis 4, **dadurch gekennzeichnet,** daß als organische Pigmente Monoazo-Pigmente, wie β-Naphthol-Pigmente und Naphtol-AS-Pigmente, Diazo-Pigmente, wie Acetessigarylid-Pigmente und Kondensationspigmente, Polycyclische Pigmente, wie Chinophthalon-Pigmente, Anthrachinon-Pigmente und -Derivate, Isoindolinon-Pigmente, Pyranthron-Pigmente, Chinacridon-Pigmente und Indanthron-Pigmente, verwendet werden.

**6.** Universalfarbpaste nach einem der Ansprüche 1 bis 4, **dadurch gekennzeichnet,** daß als anorganische Pigmente Oxide und Oxidhydroxide, wie Chromoxidgrün, Eisenoxidrot, -gelb, -braun und Titandioxid, oxidische Mischphasenpigmente, wie Nickeltitangelb, Chromtitangelb, Kobaltblau und Kobaltgrün, Ruß, Eisenblaupigmente, wie Miloriblau, verwendet werden.

**7.** Universalfarbpaste nach einem der Ansprüche 1 bis 6, **dadurch gekennzeichnet,** daß als Netzmittel Alkylphenolpolyoxiethylenkondensate, nichtionogene Alkylphenolethoxylate und Fettalkoholethoxylate, d.h. Netzmittel und Dispergierhilfsmittel, die nichtionigen sind, verwendet werden.

**8.** Universalfarbpaste nach einem der Ansprüche 1 bis 7, **dadurch gekennzeichnet,** daß als Bindemittel Polymere, wie Homo- bzw. Copolymerisate auf Poly(meth)acrylatbasis, wasserlösliche und -emulgierbare Leinölprodukte (Polymere und Copolymere), polymerisiertes Kolophonium sowie Kondensationsharze, wie Keton- und Aldehydharze, verwendet werden.

**9.** Universalfarbpaste nach einem der Ansprüche 1 bis 8, **dadurch gekennzeichnet,** daß als Lösungsmittel Polyglykoldiether, Glykoletherester, Ether, Glykolether und "Grenzlöser", wie Dimethylformamid, Dimethylsulfoxid, Dimethylacetamid, N-Methyl-2-pyrrolidon, Ester und Ketone (Aceton) verwendet werden.

**10.** Verwendung von Universalfarbpaste nach den Ansprüchen 1 bis 9 zum Abtönen von Farb- und Bindemittelsystemen, **dadurch gekennzeichnet,** daß man, bezogen auf die Farb- und Bindemittelsysteme, 0,1-25 % der Universalfarbpaste vorlegt und unter Rühren das Farb- oder Bindemittelsystem homogen einarbeitet.

**11.** Verfahren zur Herstellung der Universalfarbpaste nach den Ansprüchen 1 bis 9, **dadurch gekennzeichnet,** daß man aus den Netzmitteln, Bindemitteln und Lösungsmitteln sowie gegebenenfalls aus den zusätzlichen Hilfsstoffen gemäß Anspruch 2 bei Temperaturen von 20-60°C eine Basismischung herstellt und in diese die Pigmente einträgt und mittels geeigneter Perl-, Kugel- oder sonstiger Dispergieraggregate homogenisiert und auf die gewünschte Kornfeinheit bringt und anschließend durch Zugabe weiterer Basismischung die gewünschte Pigmentkonzentration bzw. Farbintensität einstellt.

**Claims**

**1.** Universal dye paste for mixing with commercially available dye and binding agent systems, containing dye pigments, wetting agents, binding agents and solvents, characterised in that the mixture contains

18 - 65% pigments
0.5 - 5% non-ionogenic wetting agents
10 - 50% water- and solvent-soluble or emulsifiable organic polymeric binding agents
20 - 50% water-soluble organic solvents
whereby the pigment/binding agent ratio amounts to 0.6:1 to 5:1.

**2.** Universal dye paste according to claim 1, characterised in that it additionally contains viscosity-increasing agents, anti-deposition agents and anti-foaming agents.

**3.** Universal dye paste according to claim 1 or 2, characterised in that the paste has a viscosity of 1.5 - 5 Pa.s at 20°C.

**4.** Universal dye paste according to one of claims 1 to 3, characterised in that, as pigments, there are used 20 -25% of organic or 40 - 65% of inorganic pigments.

5. Universal dye paste according to one of claims 1 to 4, characterised in that, as organic pigments, there are used monoazo pigments, such as $\beta$-naphthol pigments and naphthol AS pigments, diazo pigments, such as acetoacetic arylide pigments and condensation pigments, polycyclic pigments, such as quinophthalone pigments, anthraquinone pigments and derivatives, isoindoline pigments, pyranthrone pigments, quinacridone pigments and indanthrone pigments.

6. Universal dye paste according to one of claims 1 to 4, characterised in that, as inorganic pigments, there are used oxides and oxide hydroxides, such as chromium oxide green, iron oxide red, yellow, brown and titanium dioxide, oxidic mixed phase pigments, such as nickel-titanium yellow, chromium-titanium yellow, cobalt blue and cobalt green, carbon black, iron blue pigments, such as mineral blue.

7. Universal dye paste according to one of claims 1 to 6, characterised in that, as wetting agents, there are used alkylphenol polyoxyethylene condensates, non-ionogenic alkylphenol ethoxylates and fatty alcohol ethoxylates, i.e. wetting agents and dispersion adjuvants which are non-ionogenic.

8. Universal dye paste according to one of claims 1 to 7, characterised in that, as binding agents, there are used polymers, such as homo- and co-polymers based on poly(meth)acrylate, water-soluble and -emulsifiable linseed oil products (polymers and co-polymers), polymerised colophony, as well as condensation resins, such as ketone and aldehyde resins.

9. Universal dye paste according to one of claims 1 to 8, characterised in that, as solvents, there are used polyglycol diethers, glycol ether eaters, ethers, glycol ethers and "boundary solutisers", such as dimethylformamide, dimethyl sulphoxide, dimethylacetamide, N-methyl-2-pyrrolidone, eaters and ketones (acetone).

10. Use of universal dye paste according to claims 1 to 9 for the tinting of dye and binding agent systems, characterised in that, referred to the dye and binding agent systems, there are taken 0.1 - 25% of the universal dye paste and the dye and binding agent system homogeneously incorporated with stirring.

11. Process for the production of universal dye paste according to claims 1 to 9, characterised in that one produces a basic mixture from wetting agents, binding agents and solvents, as well as possibly from the additional adjuvants according to claim 2 at temperatures of 20 - 60°C and introduces the pigments into this and homogenises by means of suitable pearl, ball or other dispersion units and brings to the desired grain fineness and subsequently adjusts the desired pigment concentration or colour intensity by addition of further basic mixture.

**Revendications**

1. Pigment en pâle universel à mélanger avec tous les systèmes de couleurs et de liants disponibles dans le commerce, contenant des pigments colorés, des agents mouillants, des liants et des solvants, caractérisé en ce que le mélange contient
18 - 65 % de pigments
0,5 - 5 % d'agents mouillants non ionogènes
10 - 50 % de liants polymères organiques solubles ou émulsifiables dans l'eau et dans des solvants
20 - 50 % de solvants organiques hydrosolubles
dans lesquels, le rapport pigment/liant s'élève de 0,6:1 à 5:1.

2. Pigment en pâte universel selon la revendication 1, caractérisé en ce qu'il contient en outre des agents augmentant la viscosité, des agents antidépôt et des agents antimousse.

3. Pigment en pâle universel selon la revendication 1 ou 2, caractérisé en ce que la pâte présente une viscosité de 1,5 - 5 Pa.s à 20°C.

4. Pigment en pâte universel selon l'une quelconque des revendications 1 à 3, caractérisé en ce que, comme pigments, on met en oeuvre 20 - 25 % de pigments organiques ou 40 - 65 % de pigments inorganiques.

**5.** Pigment en pâte universel selon l'une quelconque des revendications 1 à 4, caractérisé en ce que, comme pigments organiques, on utilise des pigments mono-azoïques tels que des pigments de β-naphtol et des pigments de napthol-AS, des pigments diazoïques tels que des pigments d'acétoacétarylide et des pigments de condensation, des pigments polycycliques tels que des pigments de quinophtalone, des pigments d'anthraquinone et leurs dérivés, des pigments d'iso-indolinone, des pigments de pyranthrone, des pigments de quinacridone et des pigments d'indanthrone.

**6.** Pigment en pâte universel selon l'une quelconque des revendications 1 à 4, caractérisé en ce que, comme pigments inorganiques, on utilise des oxydes et des oxydes-hydroxydes tels que le vert d'oxyde de chrome, le rouge, le vert, le brun d'oxyde de fer et le dioxyde de titane, des pigments oxydiques à phases mixtes, tels que le jaune de nickel-titane, le jaune de chrome-titane, le bleu de cobalt et le vert de cobalt, le noir de carbone, des pigments bleus de fer tels que le bleu de Milori.

**7.** Pigment en pâte universel selon l'une quelconque des revendications 1 à 6, caractérisé en ce que, comme agents mouillants, on utilise des condensats d'alkylphénols-polyoxyéthylène, des éthoxylates non ionogènes d'alkylphénols et des éthoxylates d'alcools gras, c'est-à-dire des agents mouillants et des adjuvants de mise en dispersion qui sont non ionogènes.

**8.** Pigment en pâte universel selon l'une quelconque des revendications 1 à 7, caractérisé en ce que, comme liants, on utilise des polymères tels que des homo-, respectivement des copolymères à base de poly(méth)acrylates, des produits d'huile de lin solubles et émulsifiables dans l'eau (polymères et copolymères), de la colophane polymérisée, ainsi que des résines de condensation telles que des résines cétoniques et d'aldéhydes.

**9.** Pigment en pâte universel selon l'une quelconque des revendications 1 à 8, caractérisé en ce que, comme solvants, on utilise des diéthers de polyglycol, des éthers-esters de glycol, des éthers, des éthers de glycol et des "solvants de coupure" tels que le diméthylformamide, le diméthylsulfoxyde, le diméthylacétamide, la N-méthyl-2-pyrrolidone, des esters et des cétones (acétone).

**10.** Utilisation de pigments en pâte universels selon les revendications 1 à 9, pour le nuançage de systèmes de couleurs et de liants, caractérisée en ce qu'on dépose au préalable, rapportés aux systèmes de couleurs et de liants, 0,1 - 25 % du pigment en pâte universel et, tout en agitant, on incorpore de manière homogène le système de couleurs et de liants.

**11.** Procédé pour la préparation du pigment en pâte universel selon les revendications 1 à 9, caractérisé en ce qu'on prépare un mélange de base constitué par les agents mouillants, les liants et les solvants, ainsi qu'éventuellement par les adjuvants supplémentaires selon la revendication 2, à des températures de 20 - 60°C et on y incorpore les pigments, puis on homogénéise à l'aide d'agrégats appropriés de mise en dispersion à perles, à boulets ou analogues, on amène à la finesse de grains désirée et enfin, par addition d'une quantité supplémentaire du mélange de base, on règle la concentration du pigment, respectivement l'intensité de couleur désirées.